# EUROPÄISCHE PATENTSCHRIFT

(11) **EP 2 464 951 B1**
(45) Veröffentlichungstag und Bekanntmachung des Hinweises auf die Patenterteilung: **29.05.2019**
(21) Anmeldenummer: 10735271.8
(22) Anmeldetag: 21.07.2010
(51) Int. Cl.: G01N 9/00, G01N 9/32, G01N 11/16, G01F 23/296

(54) **MULTIVARIABLER SENSOR ZUR BESTIMMUNG UND/ODER ÜBERWACHUNG DES FÜLLSTANDS UND DER DICHTE UND/ODER DER VISKOSITÄT EINER FLÜSSIGKEIT IM BEHÄLTER**
MULTIVARIABLE SENSOR FOR DETERMINING AND/OR MONITORING THE FILL LEVEL AND DENSITY AND/OR VISCOSITY OF A FLUID IN A TANK
CAPTEUR À VARIABLES MULTIPLES POUR LA DÉTERMINATION ET/OU LA SURVEILLANCE DU NIVEAU DE REMPLISSAGE ET DE LA DENSITÉ ET/OU DE LA VISCOSITÉ D'UN LIQUIDE DANS UN RÉSERVOIR

(30) Priorität: 14.08.2009 DE 102009028548
(43) Veröffentlichungstag der Anmeldung: 20.06.2012
(73) Patentinhaber: Endress+Hauser SE+Co. KG, 79689 Maulburg (DE)
(72) Erfinder: MÜLLER, Alexander, 79361 Sasbach-Jechtingen (DE); LOPATIN, Sergej, 79540 Lörrach (DE); PFEIFFER, Helmut, 79585 Steinen (DE); DREYER, Volker, 79541 Lörrach (DE)
(74) Vertreter: Andres, Angelika Maria
(86) Internationale Anmeldenummer: PCT/EP2010/060521
(87) Internationale Veröffentlichungsnummer: WO 2011/018312

(56) Entgegenhaltungen:
- DE-A1- 3 149 464
- DE-A1- 3 215 040
- DE-A1- 3 416 254
- US-A1- 2007 021 931

## Beschreibung

Die vorliegende Erfindung betrifft eine Vorrichtung zur Bestimmung und/oder Überwachung eines vorbestimmten Füllstands und der Dichte und/oder der Viskosität einer Flüssigkeit in einem Behälter.

Zur Füllstandsmessung einer Flüssigkeit oder eines Schüttguts in einem Behälter werden häufig so genannte Schwinggabeln verwendet. Hierbei gibt es eine Vielzahl verschiedener Ausführungsformen, welche sich hauptsächlich durch die Form und Länge der Schwinggabel unterscheiden. Eine solche Schwinggabel besteht aus zwei Stäben und ist auf einer Membran angebracht, welche von einer Antriebseinheit zu Schwingungen angeregt wird. Die beiden Stäbe werden hierdurch zu gegenphasigen Schwingungen angeregt, wobei die Anregung mit der Resonanzfrequenz des Schwingsystems erfolgt. Diese Schwingung wird abgeschwächt, wenn die Schwinggabel in Berührung mit dem Messmedium gelangt. Durch die zusätzliche Masse, die bei der Schwingung im flüssigen Medium mitbewegt werden muss, verringert sich die Schwingfrequenz. Bei Medien mit geringer Dichte wie z.B. Gasen, ist dieser Effekt vernachlässigbar. Jedoch tritt bei allen viskosen flüssigen Medien eine Dämpfung der Schwingungsamplitude in Folge von Reibung auf. Je nach Medium wird daher die Amplituden- und/oder Frequenzänderung ausgewertet. Zudem kann die Phasenverschiebung zwischen der Antriebs- und Empfangsspannung der über den Antrieb in Schwingungen versetzten Schwingstäbe ausgewertet werden, da sich diese im Medium ebenfalls verändert.

In Behältern werden oftmals zwei solcher Schwinggabeln eingesetzt, wobei eine im unteren Bereich und eine im oberen Bereich des Behälters angebracht ist. Die oben angebrachte Schwinggabel schwingt im Normalzustand in Luft, und stellt einen Überlaufschutz dar, während die unten angebrachte Schwinggabel im Normalbetrieb im Medium schwingt und einen Trockenlaufschutz darstellt. Derartige Schwinggabeln funktionieren hervorragend in Flüssigkeiten, die keinen Ansatz bilden und in Schüttgütern mit relativ zu der Schwinggabel kleinen Partikelgrößen. Bei Medien, die Ansatz an der Schwinggabel bilden, kommt es ab einer bestimmten Ansatzdicke zur Ausbildung von Brücken, welche vom einen Stab zum anderen reichen. Diese beeinflussen das Schwingsystem und führen schließlich dazu, dass die Schwingstäbe nicht mehr schwingen und somit eine Messung nicht mehr möglich ist.

Schwinggabeln können auch zur Bestimmung der Dichte und/oder der Viskosität eines flüssigen Mediums eingesetzt werden. Um eine Messgröße eindeutig bestimmen zu können ist es jedoch notwendig, die Rahmenbedingungen konstant zu halten bzw. Störgrößen zu bestimmen. Eine solche Rahmenbedingung oder Störgröße bei der Bestimmung der Dichte und der Viskosität ist der Füllstand. Bei der Bestimmung der Viskosität stellt eine veränderliche Mediumsdichte, beispielsweise auf Grund von Temperaturschwankungen, eine Störgröße dar. Um die Viskosität dennoch bestimmen zu können wird die Dichte konstant gehalten, die Dichte mit einem separaten Messgerät bestimmt, oder ein Messverfahren gewählt, welches Dichteabhängigkeiten kompensiert. Letzteres ist oft mit hohem elektronischem Aufwand verbunden. Oftmals ist es nicht möglich, die Rahmenbedingungen konstant zu halten, sodass mindestens ein zweites Messgerät zur Bestimmung der Störgrößen notwendig ist. Dies erfordert mindestens einen weiteren Prozessanschluss, was nicht nur Mehrkosten mit sich bringt, sondern in Abhängigkeit des Anwendungsgebietes auch hygienische Risiken birgt.

Bei aus groben Partikeln bestehenden Schüttgütern oder grobe Partikel enthaltenden Flüssigkeiten, bei welchen der Durchmesser der Partikel ungefähr gleich dem Abstand zwischen den beiden Stäben der Schwinggabel ist, kommt es vor, dass sich Partikel zwischen den Stäben verklemmen. Auch dies führt zu einer Fehlfunktion der Schwinggabel. In der Regel wird in beiden Fällen eine Fehlermeldung erzeugt, die sicherheitsgerichtet den Prozess abstellt.

Ein nicht vibronisches Prinzip zur Füllstandsmessung von Flüssigkeiten ist das folgende: ein Stab wird in den Behälter eingebracht, welcher weit in den Behälter hineinragt und welcher mit mehreren so genannten Schwimmern versehen ist. Die Schwimmer richten sich dann entsprechend dem Füllstand der Flüssigkeit auf einer bestimmten Höhe aus.

Durch die Anbringung mehrerer Schwimmer am Stab kann mit dieser Vorrichtung nicht nur ein Füllstand bestimmt werden, sondern beispielsweise auch Phasengrenzen bei mehrphasigen Gemischen. Ein Nachteil bei dieser Methode ist jedoch, dass die Schwimmer verschleißanfällig sind.

Aus der Schrift DE 3215040 C2 ist eine Vorrichtung zur vibronischen Füllstandsmessung bekannt, welche aus einem Messrohr besteht, das in den Behälter eingebracht und durch einen im Inneren des Messrohrs liegenden Antrieb zu Schwingungen angeregt wird. Das Messrohr ist zylindrisch, wobei die Grundfläche rund oder elliptisch ist. Verklemmen von Partikeln stellt bei dieser Vorrichtung kein Problem dar. Ein Nachteil ist jedoch, dass zur Anregung des Messrohrs relativ hohe Frequenzen nötig sind, was den Antrieb und die elektronischen Komponenten belastet. Zudem sind nur geringe Schwingungsamplituden erreichbar.

Andere Beispiele von Vorrichtung zur vibronischen Füllstandsmessung sind aus der Schrift DE 31 49 464 A1 oder DE 34 16 254 A1 bekannt.

Die Aufgabe der Erfindung besteht darin, eine alternative Vorrichtung zur vibronischen Füllstandsmessung bereit zu stellen, bei welcher ein Verklemmen der schwingfähigen Einheit oder eine Brückenbildung durch im Messmedium enthaltene Partikel ausgeschlossen ist und welche zusätzlich die Bestimmung mindestens einer weiteren Prozessgröße ermöglicht.

Die Aufgabe wird dadurch gelöst, dass die Vorrichtung ein Messrohr aufweist, welches in den Behälter eingebracht ist, dass das Messrohr mindestens ein erstes schwingfähiges Segment und ein zweites schwingfähiges Segment aufweist, dass die schwingfähigen Segmente eine von einer kreisrunden Form abweichende Querschnittsfläche aufweisen, dass an der Innenwand der schwingfähigen Segmente Antriebs-/Empfangseinheiten angebracht sind, welche die schwingfähigen Segmente in Resonanzschwingungen versetzen, und dass mindestens eine Regel-/Auswerteeinheit vorgesehen ist, welche die Frequenz und/oder die Phase und/oder die Amplitude der Schwingungen auswertet und daraus das Erreichen des vorbestimmten Füllstands und die Dichte und/oder die Viskosität der Flüssigkeit bestimmt.

Ein Vorteil des multivariablen Sensors ist, dass mit nur einem Gerät sowohl Trockenlaufschutz als auch Überlaufschutz abgedeckt werden können, indem am dem Behälterboden nahen und am deckelnahen Ende des Messrohres jeweils ein schwingfähiges Segment ausgebildet ist. Es ist auch möglich, in der Mitte des Messrohres ein weiteres schwingfähiges Segment auszubilden, sodass mit dessen Hilfe ein weiterer Füllstand bestimmt werden oder eine Plausibilitätsabfrage stattfinden kann. Meldet beispielsweise der Trockenlaufschutz Alarm und zeigt das mittlere Segment noch Medium an, so liegt ein Fehler vor. Weiterhin kann mit einem der Segmente der Füllstand überwacht werden, während ein weiteres Segment zur Bestimmung der Dichte des Mediums dient. Bei gemessener oder bekannter Dichte ist mit einem schwingfähigen Segment darüber hinaus die Viskosität des Mediums bestimmbar. Somit handelt es sich bei der erfindungsgemäßen Vorrichtung um einen Multivariablen Sensor, welcher die Bestimmung einer Vielzahl von Prozessgrößen mit nur einem Messgerät ermöglicht. Dies ist besonders vorteilhaft, da nur ein Prozessanschluss erforderlich ist.

Durch die von einer zylindrischen Form abweichende Form der schwingfähigen Segmente mit mindestens einer flachen Seitenfläche können diese mit geringeren Frequenzen zu Schwingungen angeregt werden, wodurch große Schwingungsamplituden erzielt werden können.

Ein weiterer Vorteil des erfindungsgemäßen multivariablen Sensors ist die Möglichkeit der Anbringung weiterer Sensoren. Werden zur Bestimmung verschiedener Prozessgrößen jeweils eigenständige Geräte in den Behälter eingebracht, sind entsprechend viele Anschlüsse notwendig. Im Gegensatz hierzu ist bei der Integration von Sensoren zur Bestimmung der gewünschten Prozessgrößen in das Messrohr nur eine Anschlussöffnung im Behälter ausreichend. Beispielsweise können an dem Messrohr neben den schwingfähigen Segmenten zur vibronischen Füllstandsmessung auch ein Temperatursensor und mindestens ein Drucksensor angebracht werden. Hierbei ist die Position der Sensoren abhängig von der jeweiligen Anwendung. Soll beispielsweise die Mediumstemperatur bestimmt werden, muss sich der Temperatursensor an einer Stelle befinden, die vom Medium bedeckt ist, um einen zuverlässigen Messwert zu erhalten. Handelt es sich bei dem Messgerät um einen Trockenlaufschutz ist davon auszugehen, dass der Endbereich des Messrohrs ständig mit Medium bedeckt ist, sodass der Temperatursensor in diesem Fall am besten in diesem Endbereich angebracht ist. Damit der Drucksensor den Prozessdruck bestimmt, ist er bevorzugt im oberen Bereich nahe dem Anschluss des Messrohrs an den Behälter angebracht. Es ist ebenfalls denkbar, dass jeweils ein Drucksensor im unteren und im oberen Bereich des Messrohrs angebracht ist bzw. dass die drucksensitiven Elemente eines Differenzdrucksensors im unteren und oberen Bereich des Messrohrs angeordnet sind und der Differenzdruck bestimmt wird. Dieser ist proportional zu dem hydrostatischen Druck der Flüssigkeit im Behälter, sodass hieraus der Füllstand der Flüssigkeit kontinuierlich bestimmbar ist.

In einer ersten Ausgestaltung der erfindungsgemäßen Lösung weisen die schwingfähigen Segmente eine Querschnittsfläche auf, die oval, elliptisch oder ein Vieleck mit einer geraden Anzahl an Seiten, von denen jeweils zwei zueinander parallel sind, oder die schwingfähigen Segmente weisen eine im Wesentlichen ovale oder elliptische Grundform mit zwei parallelen Seiten auf. Die symmetrische Form ist auf Grund der Entkopplung des Schwingsystems notwendig. Es sind jedoch auch Messrohre denkbar, bei welchen eine Entkopplung nicht zwingend notwendig ist, da nur geringe Kopplungseffekte auftreten. Dies ist bei schwingfähigen Segmenten der Fall, welche gegenüber benachbarten Zwischensegmenten eine geringe Masse aufweisen. In einer alternativen Ausgestaltung ist die Querschnittsfläche daher bevorzugt oval oder elliptisch mit einer geraden Seite. Die schwingfähigen Segmente weisen dann nur eine flache Seitenfläche auf, welche von einer Antriebs-/Empfangseinheit zu Schwingungen angeregt wird. Die Querschnittsfläche kann dann auch ein Vieleck mit einer ungeraden Anzahl an Seiten sein.

Durch die mindestens eine flache Seitenfläche wird die Steifigkeit des schwingfähigen Segments herabgesetzt und zudem das Aufbringen der Antriebs-/Empfangseinheit erleichtert. Die verminderte Steifigkeit des schwingfähigen Segments gegenüber einem zylindrischen Rohrsegment hat zur Folge, dass die zur resonanten Anregung des schwingfähigen Segments notwendige Frequenz geringer ist, sodass die elektronischen Komponenten und die Antriebs-/Empfangseinheit geringeren Belastungen ausgesetzt sind bzw. eine geringe Leistungsaufnahme erfolgt. Weiterhin werden durch die niedrigen Frequenzen maximale Schwingungsamplituden erreicht. Alle schwingfähigen Segmente weisen bevorzugt die gleiche Form auf. Zwischen den schwingfähigen Segmenten liegende Segmente sind bevorzugt mit kreisrundem Querschnitt ausgestaltet. Die schwingfähigen Segmente weisen dann Anschlussbereiche auf, in welchen die unterschiedlichen Querschnitte einander angepasst werden.

Gemäß einer Weiterbildung des erfindungsgemäßen multivariablen Sensors weist das Messrohr mindestens drei Segmente auf, wobei mindestens zwei Segmente als schwingfähige Segmente ausgestaltet sind, wobei mindestens ein Segment als ein Zwischensegment mit einer kreisrunden Querschnittsfläche ausgestaltet ist und wobei die schwingfähigen Segmente Übergangsbereiche aufweisen, welche zum Angleichen der Form der Querschnittsfläche der mindestens zwei schwingfähigen Segmente an die kreisrunde Querschnittsfläche des mindestens einen Zwischensegments dienen.

In einer Weiterbildung der erfindungsgemäßen Lösung liegen die Längsachsen der schwingfähigen Segmente und die Längsachsen der Zwischensegmente auf einer gemeinsamen Geraden. In alternativen Ausgestaltungen sind die schwingfähigen Segmente zumindest teilweise exzentrisch angeordnet. Dies kann beispielsweise erforderlich sein, wenn sich in dem Behälter ein Hindernis befindet, welches umgangen werden muss.

Gemäß einer Weiterbildung des erfindungsgemäßen Verfahrens handelt es sich bei der Antriebs-/Empfangseinheit um einen piezoelektrischen Antrieb. Dieser ist an der Innenwand des schwingfähigen Segments symmetrisch angebracht. Der piezoelektrische Antrieb ist bevorzugt als Stapelantrieb ausgestaltet.

Bei einer weiteren Weiterbildung der Erfindung ist die Antriebs-/Empfangseinheit als elektrodynamischer Antrieb ausgestaltet. Bei den Antriebselementen des elektrodynamischen Antriebs handelt es sich um elektromagnetische, elektrostatische oder magnetostriktive Antriebselemente. Der elektrodynamische Antrieb ist an der Innenwand des schwingfähigen Segments angebracht.

Eine Weiterbildung der erfindungsgemäßen Lösung besteht darin, dass an der Innenwand der schwingfähigen Segmente mehrere Antriebselemente paarweise an gegenüberliegenden Seiten des schwingfähigen Segments symmetrisch zur Längsachse des schwingfähigen Segments angeordnet sind.

Gemäß einer weiteren Weiterbildung der Erfindung sind die Antriebselemente der Antriebs-/Empfangseinheiten derart an der Innenwand der schwingfähigen Segmente angebracht, dass zwei gegenüberliegende Seiten der schwingfähigen Segmente gegenphasige Schwingungen ausführen.

Eine Weiterbildung des erfindungsgemäßen multivariablen Sensors beinhaltet, dass an dem Messrohr ein Temperatursensor derart angebracht ist, dass er die Schwingungen der schwingfähigen Segmente nicht beeinträchtigt. Beispielsweise zur Erkennung von Ansatzbildung oder zur Dichtemessung ist die Kenntnis der vorherrschenden Temperatur notwendig. Durch Anbringen des Temperatursensors am Messrohr ist hierfür kein separates Messgerät nötig, was einen weiteren Flansch oder Anschluss einspart. Zudem können die Messdaten des Temperatursensors mit den Daten der schwingfähigen Segmente in einer gemeinsamen Regel-/Auswerteeinheit verarbeitet werden.

Eine Weiterbildung der Erfindung sieht vor, dass das Messrohr mindestens einen Drucksensor aufweist. Zur Druckmessung ist ein Drucksensor bevorzugt am in den Behälter hineinragenden unteren Ende des Messrohrs angebracht. Bevorzugt sind zwei Drucksensoren bzw. die drucksensitiven Elemente eines Differenzdrucksensors jeweils in einem Endbereich des Messrohres angeordnet, sodass der Differenzdruck bestimmbar ist. Auf Grund des Zusammenhangs zwischen Differenzdruck und hydrostatischem Druck ermöglicht dies die kontinuierliche Füllstandsmessung.

Eine Weiterbildung der erfindungsgemäßen Lösung besteht darin, dass das Messrohr zwei durch ein Zwischensegment voneinander beabstandete schwingfähige Segmente aufweist, welche jeweils eine Antriebs-/Empfangseinheit aufweisen, die sie in Schwingung versetzt, und dass das Messrohr in seiner Länge und der Position der schwingfähigen Segmente so an den Behälter angepasst ist, dass das erste schwingfähige Segment einen maximalen Füllstand detektiert und das zweite schwingfähige Segment einen minimalen Füllstand detektiert.

Gemäß einem Ausführungsbeispiel ist vorgesehen, dass das Messrohr mindestens zwei durch ein Zwischensegment voneinander beabstandete schwingfähige Segmente aufweist, welche jeweils eine Antriebs-/Empfangseinheit aufweisen, die sie in Schwingung versetzt, und dass das Messrohr in seiner Länge und der Position der schwingfähigen Segmente so an den Behälter angepasst ist, dass die Regel-/Auswerteeinheit anhand der Schwingungen der schwingfähigen Segmente die Dichte und/oder die Viskosität des Mediums in verschiedenen vorbestimmten Höhen bestimmt.

Eine weitere Weiterbildung der Erfindung besteht darin, dass die Regel-/Auswerteeinheit die Antriebs-/Empfangseinheiten der schwingfähigen Segmente und die gegebenenfalls zusätzlich angebrachten Sensoren nacheinander ansteuert, ausliest und die jeweilige Prozessgröße bestimmt.
Sind beispielsweise zwei schwingfähige Segmente zur Bestimmung eines minimalen und eines maximalen Füllstands, sowie zur Bestimmung der Dichte des Messmediums, sowie ein Zwischensegment mit einem Temperatursensor vorgesehen und ist eine Druckmesszelle im Endbereich des Messrohrs angeordnet, so bestimmt die Regel-/Auswerteeinheit nacheinander die Größen "Maximaler Füllstand erreicht?", "Dichte 1", "aktuelle Temperatur", "Minimaler Füllstand erreicht?", "Dichte 2" und "aktueller Druck" in einer dem Prozess angepassten oder vorgegebenen Reihenfolge.

Die Erfindung wird anhand der nachfolgenden Figuren näher erläutert.
- Fig. 1: zeigt einen erfindungsgemäßen multivariablen Sensor mit zwei schwingfähigen Segmenten,
- Fig. 1a: zeigt schematisch einen Querschnitt eines schwingfähigen Segments nach Fig. 1,
- Fig. 1b: zeigt schematisch eine alternative Querschnittsform eines schwingfähigen Segments,
- Fig. 2a: zeigt eine Detailansicht eines schwingfähigen Segments,
- Fig. 2b: zeigt eine Detailansicht eines schwingfähigen Segments, wobei die Ansicht gegenüber der Ansicht aus Fig. 2a um 90° um die Längsachse gedreht ist.

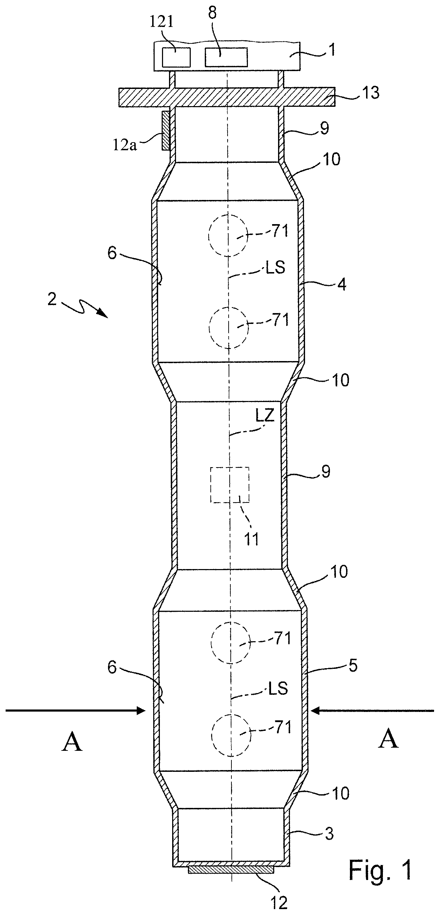

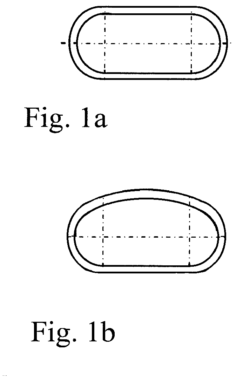

In Fig. 1 ist ein multivariabler Sensor mit einem ersten schwingfähigen Segment 4, einem zweiten schwingfähigen Segment 5 und einem Zwischensegment 9 dargestellt. An dem Zwischensegment 9 ist ein Temperatursensor 11 und im Endbereich 3 des Messrohrs 2 ist ein Drucksensor 12 angeordnet. Die schwingfähigen Segmente 4, 5 und das Zwischensegment 9 sind hierbei so angeordnet, dass die Längsachsen LS der schwingfähigen Segmente 4, 5 und die Längsachse LZ des Zwischensegments 9 auf einer gemeinsamen Geraden liegen.

Die Länge des Zwischensegments 9 ist so an die Abmessungen des Behälters angepasst, dass das zweite schwingfähige Segment 5 auf der Höhe liegt, welche dem minimalen Füllstand entspricht. Das Segment zwischen Flansch 13 und erstem schwingfähigen Segment 4 ist in seiner Länge so gewählt, dass das erste schwingfähige Segment 4 zur Überwachung des maximalen Füllstands dient. Alternativ sind die Längen der jeweiligen Segmente derart gewählt, dass entweder ein maximaler oder ein minimaler Füllstand überwachbar ist und weiterhin die Dichte und/oder die Viskosität des Mediums auf einer bestimmten Höhe bestimmbar ist. In alternativen Ausgestaltungen sind weitere schwingfähige Segmente denkbar, welche auf Höhen zwischen der minimalen und der maximalen Füllstandshöhe im Behälter angeordnet sind, sodass auch dazwischen liegende Füllstände bestimmbar sind, oder die Dichte und/oder die Viskosität des Mediums an diesen Positionen eindeutig bestimmbar sind. Vorteilhaft ist ein zweiter Drucksensor 12a im oberen Bereich des Messrohres 2 nahe dem Prozessanschluss angeordnet, sodass dieser nicht mit Medium bedeckt ist. Durch eine Bestimmung der Differenz aus dem am Ort des zweiten Drucksensors 12a herrschenden Druck und dem am Ort des am unteren Endbereich des Messrohrs 2 angeordneten Drucksensors 12 herrschenden Drucks ist neben der einfachen Druckbestimmung mit dem Drucksensor 12 eine kontinuierliche Füllstandsmessung möglich. Alternativ ist ein Differenzdrucksensor 121 nahe dem Prozessanschluss benachbart zu oder in dem Gehäuse 1 des multivariablen Sensors angeordnet. Der Drucksensor 12 und der zweite Drucksensor 12a sind dann zwei drucksensitive Elemente, z.B. in Form von Membranen. Mit den drucksensitiven Elementen verbunden sind - der besseren Übersicht wegen nicht dargestellte - Zuleitungen, welche den auf das jeweilige drucksensitive Element einwirkenden Druck dem Differenzdrucksensor 121 zuführen. Die Zuleitungen sind im Inneren des Messrohrs 2 angeordnet.

In diesem bevorzugten Ausführungsbeispiel sind die Querschnittsflächen der schwingfähigen Segmente 4, 5 oval mit zwei parallelen Seiten. Eine Darstellung des Querschnitts des schwingfähigen Segments 5 in der in Fig. 1 gezeigten Schnittebene A-A ist in Fig. 1a gegeben. Der Umriss des Querschnitts gleicht also dem Verlauf einer Stadionlaufbahn. In alternativen Ausführungsformen ist die Querschnittsfläche oval mit nur einer geraden Seite, elliptisch mit mindestens einer geraden Seite oder ein Vieleck mit einer geraden Anzahl an Seiten, wobei diese bevorzugt paarweise parallel zueinander sind. Ein Beispiel für einen Querschnitt mit nur einer geraden Seite ist in der Fig. 1b dargestellt. In der in Fig. 1 bzw. Fig. 1a dargestellten Ausgestaltung weisen die schwingfähigen Segmente 4, 5 jeweils zwei parallele Seitenflächen auf. Bevorzugt sind in diesem Bereich auf der Innenseite 6 der schwingfähigen Segmente 4, 5 die Antriebselemente 71 der Antriebs-/Empfangseinheit 7 angeordnet. Durch die Planarität der Seitenflächen wird die Steifigkeit der Seitenflächen herabgesetzt, sodass gegenüber gewölbten Flächen geringere Frequenzen zur Schwingungsanregung notwendig sind. Dies ist vorteilhaft für die elektronischen Komponenten der erfindungsgemäßen Vorrichtung, da die Leistungsaufnahme geringer ist und zudem große Schwingungsamplituden erzielt werden können. Das Zwischensegment 9 weist bevorzugt eine kreisrunde Querschnittsfläche auf. Zur Anpassung der Querschnittsfläche der schwingfähigen Segmente 4, 5 an die des Zwischensegments 9 sind Übergangsbereiche 10 vorgesehen, in welchen sich die Querschnittsflächen allmählich einander angleichen. Der Endbereich 3 des Messrohrs 2 ist in diesem Ausführungsbeispiel wie ein Zwischensegment 9 mit kreisrunder Querschnittsfläche ausgestaltet. In alternativen Ausführungen nimmt der Endbereich 3 andere Formen an oder stellt kein separates Segment dar, sondern wird von dem zweiten schwingfähigen Segment 5 gebildet. Der Endbereich ist bevorzugt geschlossen.

Zum Anschluss des multivariablen Sensors an den Behälter ist ein Flansch 13 an dem Messrohr 2 angebracht. Es versteht sich von selbst, dass der Sensor auch einen Anschluss für eine alternative Anschlussart wie beispielsweise ein Gewinde aufweisen kann. In dieser Figur nur angedeutet dargestellt ist ein Gehäuse 1, welches oberhalb des Anschlusses außerhalb des Behälters angeordnet ist und elektronische Komponenten wie die Regel-/Auswerteeinheit 8 beinhaltet.

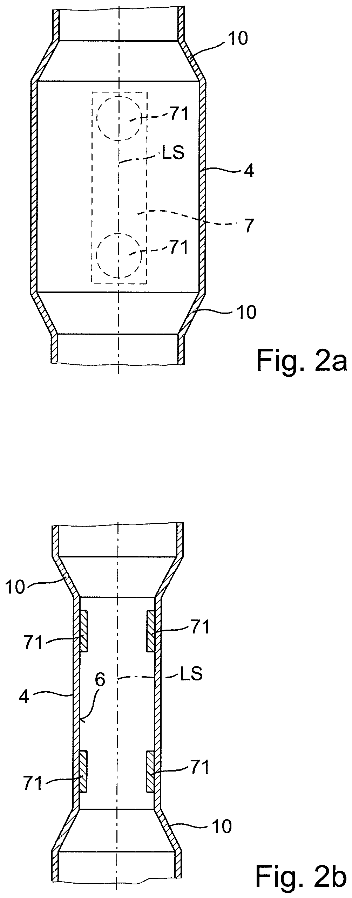

Fig. 2a und Fig. 2b offenbaren eine Detailansicht eines schwingfähigen Segments 4, 5 aus Fig. 1. Hierbei zeigt Fig. 2a eine Vorderansicht, d.h. die Sicht auf die flachen Seitenflächen des schwingfähigen Segments 4, 5 und Fig. 2b eine um 90° gegenüber Fig. 2a gedrehte Seitenansicht. Die Antriebselemente 71 der Antriebs-/Empfangseinheit 7 sind hierbei auf der Innenseite 6 des schwingfähigen Segments 4, 5 angebracht. In diesem Ausführungsbeispiel handelt es sich um vier Antriebselemente 71, wobei jeweils zwei gegenüberliegend auf den flachen Seitenflächen angeordnet sind. Diese Anzahl ist lediglich eine bevorzugte Ausführungsform, auch eine andere Anzahl an Antriebselementen 71 ist möglich. Ausschlaggebend ist, dass die Anordnung der Antriebselemente 71 an der Innenseite 6 des schwingfähigen Segments 4 immer symmetrisch erfolgt, weshalb die Anzahl der Antriebselemente 71 gerade ist.

Bei den Antriebselementen 71 handelt es sich bevorzugt um piezoelektrische Elemente, wobei in einer Ausgestaltung die Antriebselemente auch zum Empfang der Schwingungssignale dienen und in einer alternativen Ausgestaltung Antriebselemente, welche nur zum Antrieb des schwingfähigen Segments 4 dienen und Empfangselemente, welche nur zum Empfang der Schwingungssignale des schwingfähigen Segments 4 dienen, vorgesehen sind. Die piezoelektrische Antriebs-/Empfangseinheit kann gleichermaßen als Bimorphantrieb oder als Stapelantrieb ausgeführt sein. Es sind aber auch magnetostriktive, elektrostatische oder elektromagnetische Antriebselemente 71 denkbar. Die Anordnung der Antriebselemente 71 ist hierbei derart gewählt, dass die Seiten, auf welchen sie aufgebracht sind, gegenphasige Schwingungen mit der Resonanzfrequenz des schwingfähigen Segments 4, 5 ausführen. Bei der Bedeckung oder zumindest teilweisen Bedeckung des schwingfähigen Segments 4, 5 mit flüssigem Medium wird die Schwingfrequenz auf Grund der erhöhten mitbewegten Masse vermindert. Diese Änderung wird beispielsweise von denselben piezoelektrischen Elementen detektiert, welche auch die Antriebselemente 71 bilden.

Die Regel-/Auswerteeinheit 8 erzeugt auf der Basis dieses Empfangssignals ein Schaltsignal, welches den freien oder bedeckten Zustand des jeweiligen schwingfähigen Segments 4, 5 angibt. In einer Ausgestaltung ermittelt die Regel-/Auswerteeinheit 8 anhand der Schwingungen des schwingfähigen Segments 4, sowie der mit dem schwingfähigen Segment 5 gewonnenen Information über den Füllstand, weitere Prozessgrößen wie die Dichte und/oder die Viskosität. Die Viskosität wird vorzugsweise gemäß einem der in der WO 2009037050 A1 oder der DE 10050299 A1 beschriebenen Verfahren bestimmt. Demgemäß erfolgt die Viskositätsbestimmung beispielsweise indem die Anregung zu resonanten Schwingungen kurzzeitig unterbrochen und die Abklingkonstante ausgewertet wird, oder mittels eines Frequenz-Phasendiagramms. Die Dichte wird in der Regel bestimmt, indem die Schwingfrequenz ausgewertet wird. Je höher die Dichte des Mediums ist, desto niedriger ist die Resonanzfrequenz, sodass aus einer Änderung der Resonanzfrequenz auf eine Änderung der Mediumsdichte geschlossen werden kann. Hierzu ist es allerdings notwendig sicherzustellen, dass eine Änderung in der Schwingfrequenz auf eine Änderung der Dichte und nicht auf eine Änderung des Füllstands zurückzuführen ist. Mit der erfindungsgemäßen Vorrichtung ist dies ohne weiteres möglich, da mit dem auf einer geringeren Höhe im Behälter angeordneten schwingfähigen Segment 5 die Dichte bestimmbar ist, während mit dem weiter oben im Behälter angeordneten schwingfähigen Segment 4 der Füllstand überwacht werden kann. Solange das schwingfähige Segment 4 von dem Medium bedeckt ist, kann mit dem unterhalb angeordneten schwingfähigen Segment 5 die Dichte oder die Viskosität bestimmt werden. In einer Ausgestaltung ist ein drittes schwingfähiges Segment vorgesehen, sodass die Dichte und die Viskosität jeweils mit einem separaten schwingfähigen Segment bestimmbar sind. Alternativ ist die Regel-/Auswerteeinheit 8 so ausgestaltet, dass die schwingfähigen Segmente 4, 5 in Abhängigkeit der zu bestimmenden Prozessgröße unterschiedlich anregbar bzw. deren Schwingungen entsprechend auswertbar sind.

### Bezugszeichenliste

- 1: Gehäuse
- 2: Messrohr
- 3: Endbereich des Messrohrs
- 4: Erstes schwingfähiges Segment
- 5: Zweites schwingfähiges Segment
- 6: Innenseite eines schwingfähigen Segments
- 7: Antriebs-/Empfangseinheit
- 71: Antriebselement
- 8: Regel-/Auswerteeinheit
- 9: Zwischensegment
- 10: Übergangsbereich
- 11: Temperatursensor
- 12: Drucksensor
- 12a: Zweiter Drucksensor
- 121: Relativdrucksensor
- 13: Flansch
- LS: Längsachse eines schwingfähigen Elements
- LZ: Längsachse eines Zwischenelements

## Patentansprüche

1. Multivariabler Sensor zur Bestimmung und/oder Überwachung zumindest eines vorbestimmten Füllstands und der Dichte und/oder der Viskosität einer Flüssigkeit in einem Behälter, mit einem in den Behälter eingebrachten Messrohr (2),
wobei das Messrohr (2) mindestens drei Segmente (4,5,9) aufweist,
wobei mindestens zwei Segmente als schwingfähige Segmente (4,5) ausgestaltet sind,
wobei die schwingfähigen Segmente (4,5) eine von einer kreisrunden Form abweichende Querschnittsfläche mit mindestens einer geraden Seite aufweisen,
wobei an der Innenwand (6) der schwingfähigen Segmente (4,5) Antriebs-/Empfangseinheiten (7) angebracht sind, welche die schwingfähigen Segmente (4,5) in Resonanzschwingungen versetzen,
wobei mindestens eine Regel-/Auswerteeinheit (8) vorgesehen ist, welche die Frequenz und/oder die Phase und/oder die Amplitude der Schwingungen auswertet,
wobei mindestens ein Segment als Zwischensegment (9) mit einer kreisrunden Querschnittsfläche ausgestaltet ist und wobei die schwingfähigen Segmente (4,5) Übergangsbereiche (10) aufweisen, welche zum Angleichen der Form der Querschnittsfläche der mindestens zwei schwingfähigen Segmente (4,5) an die kreisrunde Querschnittsfläche des mindestens einen Zwischensegments (9) dienen,
wobei die Längsachsen (LS) der schwingfähigen Segmente (4,5) und die Längsachsen (LZ) der Zwischensegmente (9) auf einer gemeinsamen Gerade liegen,
und wobei die Regel-/Auswerteeinheit (8) aus der Auswertung der Frequenz und/oder der Phase und/oder der Amplitude der Schwingungen das Erreichen des vorbestimmten Füllstands und die Dichte und/oder die Viskosität der Flüssigkeit bestimmt.

2. Multivariabler Sensor nach Anspruch 1,
wobei die schwingfähigen Segmente (4,5) eine Querschnittsfläche aufweisen, die oval, elliptisch oder ein Vieleck mit einer geraden Anzahl an Seiten, von denen jeweils zwei zueinander parallel sind, ist, oder wobei die schwingfähigen Segmente (4,5) eine im Wesentlichen ovale oder elliptische Grundform mit zwei parallelen Seiten aufweisen.

3. Multivariabler Sensor nach mindestens einem der Ansprüche 1-2,
wobei es sich bei der Antriebs-/Empfangseinheit (7) um piezoelektrische Antriebselemente (71) handelt.

4. Multivariabler Sensor nach mindestens einem der Ansprüche 1-2,
wobei es sich bei der Antriebs-/Empfangseinheit (7) um elektromagnetische, elektrostatische oder magnetostriktive Antriebselemente (71) handelt.

5. Multivariabler Sensor nach Anspruch 3 oder 4,
wobei an der Innenwand (6) der schwingfähigen Segmente (4,5) mehrere Antriebselemente (71) paarweise an gegenüberliegenden Seiten des schwingfähigen Segments (4,5) symmetrisch zur Längsachse (LS) des schwingfähigen Segments (4,5) angeordnet sind.

6. Multivariabler Sensor nach mindestens einem der Ansprüche 3-5,
wobei die Antriebselemente (71) der Antriebs-/Empfangseinheiten (7) derart an der Innenwand (6) der schwingfähigen Segmente (4,5) angebracht sind, dass zwei gegenüberliegende Seiten der schwingfähigen Segmente (4,5) gegenphasige Schwingungen ausführen.

7. Multivariabler Sensor nach mindestens einem der vorangehenden Ansprüche,
wobei das Messrohr (2) an dem sich im Behälter befindenden Endbereich (3) geschlossen ist.

8. Multivariabler Sensor nach mindestens einem der vorangehenden Ansprüche,
wobei an dem Messrohr (2) ein Temperatursensor (11) derart angebracht ist, dass er die Schwingungen der schwingfähigen Segmente (4,5) nicht beeinträchtigt.

9. Multivariabler Sensor nach mindestens einem der vorangehenden Ansprüche,
wobei das Messrohr (2) mindestens einen Drucksensor (12) oder einen Relativdrucksensor (121) aufweist.

10. Multivariabler Sensor nach mindestens einem der vorangehenden Ansprüche,
wobei das Messrohr (2) zwei durch ein Zwischensegment (9) voneinander beabstandete schwingfähige Segmente (4,5) aufweist, welche jeweils eine Antriebs-/Empfangseinheit (7) aufweisen, die sie in Schwingung versetzt, und wobei das Messrohr (2) in seiner Länge und der Position der schwingfähigen Segmente (4,5) so an den Behälter angepasst ist, dass das erste schwingfähige Segment (4) einen maximalen Füllstand detektiert und das zweite schwingfähige Segment (5) einen minimalen Füllstand detektiert.

11. Multivariabler Sensor nach mindestens einem der vorangehenden Ansprüche,
wobei das Messrohr (2) mindestens zwei durch ein Zwischensegment (9) voneinander beabstandete schwingfähige Segmente (4,5) aufweist, welche jeweils eine Antriebs-/Empfangseinheit (7) aufweisen, die sie in Schwingung versetzt, und wobei das Messrohr (2) in seiner Länge und der Position der schwingfähigen Segmente (4,5) so an den Behälter angepasst ist, dass die Regel-/Auswerteeinheit (8) anhand der Schwingungen der schwingfähigen Segmente (4,5) die Dichte und/oder die Viskosität des Mediums in verschiedenen vorbestimmten Höhen bestimmt.

12. Multivariabler Sensor nach mindestens einem der vorangehenden Ansprüche,
wobei die Regel-/Auswerteeinheit (8) die Antriebs-/Empfangseinheiten (7) der schwingfähigen Segmente (4,5) und die gegebenenfalls zusätzlich angebrachten Sensoren (11,12) nacheinander ansteuert, ausliest und die jeweilige Prozessgröße bestimmt.

## Claims

1. Multivariable sensor for determining and/or monitoring at least a predefined level and the density and/or the viscosity of a liquid in a vessel, with a measuring tube (2) introduced in the vessel,
wherein the measuring tube (2) has at least three segments (4, 5, 9),
wherein at least two segments are designed as segments capable of vibration (4, 5),
wherein the segments capable of vibration (4, 5) have a cross-section that is different from a circular shape, with at least one straight side,
wherein drive/reception units (7) that cause the segments capable of vibration (4,5) to produce resonance vibrations are fitted on the interior wall (6) of the segments capable of vibration (4, 5),
wherein at least one control/evaluation unit (8) is provided which evaluates the frequency and/or the phase and/or the amplitude of the vibrations,
wherein at least one segment is designed as an intermediate segment (9) with a circular cross-section and wherein the segments capable of vibration (4, 5) have transition zones (10), which are used to adapt the shape of the cross-section surface of the at least two segments capable of vibration (4, 5) to the circular cross-section surface of the at least one intermediate segment (9),
wherein the longitudinal axes (LS) of the segments capable of vibration (4, 5) and the longitudinal axes (LZ) of the intermediate segments (9) are located on the same straight line,
and wherein the control/evaluation unit (8) uses the evaluation of the frequency and/or the phase and/or the amplitude of the vibrations to determine whether a predefined level is reached and to determine the density and/or the viscosity of the liquid.

2. Multivariable sensor as claimed in Claim 1,
wherein the segments capable of vibration (4, 5) have a cross-section surface that is oval, elliptical or a polygon with an even number of sides, wherein two of each of these sides are parallel to one another, or wherein the segments capable of vibration (4, 5) have an essentially oval or elliptical basic form with two parallel sides.

3. Multivariable sensor as claimed in at least one of the Claims 1-2,
wherein the drive/reception unit (7) constitutes piezoelectric drive elements (71).

4. Multivariable sensor as claimed in at least one of the Claims 1-2,
wherein the drive/reception unit (7) constitutes electromagnetic, electrostatic or magnetostrictive drive elements (71).

5. Multivariable sensor as claimed in Claim 3 or 4,
wherein multiple drive elements (71) are arranged on the interior wall (6) of the segments capable of vibration (4, 5), such that they are arranged in pairs on opposite sides of the segment capable of vibration (4, 5) in a symmetrical manner in relation to the longitudinal axis (LS) of the segment capable of vibration (4, 5).

6. Multivariable sensor as claimed in at least one of the Claims 3-5,
wherein the drive elements (71) of the drive/reception units (7) are mounted on the interior wall (6) of the segments capable of vibration (4, 5) in such a way that two opposite sides of the segments capable of vibration (4, 5) produce out-of-phase vibrations.

7. Multivariable sensor as claimed in at least one of the previous claims,
wherein the measuring tube (2) is closed at the end section (3) that is located in the vessel.

8. Multivariable sensor as claimed in at least one of the previous claims,
wherein a temperature sensor (11) is mounted on the measuring tube (2) in such a way that it does not affect the vibrations of the segments capable of vibration (4, 5).

9. Multivariable sensor as claimed in at least one of the previous claims,
wherein the measuring tube (2) has at least one pressure sensor (12) or a relative pressure sensor (121).

10. Multivariable sensor as claimed in at least one of the previous claims,
wherein the measuring tube (2) has two segments capable of vibration (4, 5) that are separated by an intermediate segment (9), wherein each segment has a drive/reception unit (7), which causes them to vibrate,
and wherein, in terms of its length and the position of the segments capable of vibration (4, 5), the measuring tube (2) is adapted to the vessel in such a way that the first segment capable of vibration (4) detects a maximum level and the second segment capable of vibration (5) detects a minimum level.

11. Multivariable sensor as claimed in at least one of the previous claims,
wherein the measuring tube (2) has at least two segments capable of vibration (4, 5) that are separated from one another by an intermediate segment (9), wherein each of said segments has a drive/reception unit (7), which causes them to vibrate,
and wherein, in terms of its length and the position of the segments capable of vibration (4, 5), the measuring tube (2) is adapted to the vessel in such a way that the control/evaluation unit (8) determines the density and/or viscosity of the medium at various predefined levels using the vibrations of the segments capable of vibration (4, 5).

12. Multivariable sensor as claimed in at least one of the previous claims,
wherein the control/evaluation unit (8) controls and reads in succession the drive/reception units (7) of the segments capable of vibration (4, 5), and the sensors (11, 12) that may be additionally mounted, and determines the respective process variable.

## Revendications

1. Capteur multivariable destiné à la détection et/ou la surveillance d'au moins un niveau prédéfini et de la densité et/ou de la viscosité d'un liquide dans un réservoir, avec un tube de mesure (2) installé dans le réservoir,
le tube de mesure (2) présentant au minimum trois segments (4, 5, 9),
au moins deux segments étant conçus en tant que segments aptes à vibrer (4, 5), les segments aptes à vibrer (4, 5) présentant une superficie de section différente d'une forme circulaire, avec au moins un côté droit,
capteur pour lequel des unités d'entraînement / de réception (7) sont montées sur la paroi intérieure (6) des segments aptes à vibrer (4, 5), lesquelles unités font entrer en vibrations de résonance les segments apte à vibrer (4, 5),
capteur pour lequel est prévue au moins une unité de régulation / d'exploitation (8), qui exploite la fréquence et/ou la phase et/ou l'amplitude des vibrations, au moins un segment étant conçu en tant que segment intermédiaire (9) avec une superficie de section circulaire et les segments aptes à vibrer (4, 5) présentant des zones de transition (10), qui servent à l'adaptation de la forme de la superficie de section des au moins deux segments aptes à vibrer (4, 5) à la superficie de section circulaire de l'au moins un segment intermédiaire (9),
les axes longitudinaux (LS) des segments aptes à vibrer (4, 5) et les axes longitudinaux (LZ) des segments intermédiaires (9) se situant sur une même droite,
et l'unité de régulation / d'exploitation (8) déterminant à partir de l'exploitation de la fréquence et/ou de la phase et/ou de l'amplitude des vibrations, l'atteinte du niveau prédéfini, ainsi que la densité et/ou la viscosité du liquide.

2. Capteur multivariable selon la revendication 1,
pour lequel les segments aptes à vibrer (4, 5) présentent une superficie de section qui est ovale, elliptique ou est un polygone constitué d'un nombre pair de côtés, parmi lesquels deux sont respectivement parallèles, ou pour lequel les segments aptes à vibrer (4, 5) présentent pour l'essentiel une forme de base ovale ou elliptique avec deux côté parallèles.

3. Capteur multivariable selon au moins l'une des revendications 1-2,
pour lequel il s'agit, concernant l'unité d'entraînement / de réception (7), d'éléments d'entraînement (71) piézoélectriques.

4. Capteur multivariable selon au moins l'une des revendications 1-2,
pour lequel il s'agit, concernant l'unité d'entraînement / de réception (7), d'éléments d'entraînement (71) électromagnétiques, électrostatiques ou magnétostrictifs.

5. Capteur multivariable selon la revendication 3 ou 4,
pour lequel sont disposés, sur la paroi intérieure (6) des segments aptes à vibrer (4, 5), plusieurs éléments d'entraînement (71) par paires sur des côtés opposés du segment apte à vibrer (4, 5), de façon symétrique à l'axe longitudinal (LS) du segment apte à vibrer (4, 5).

6. Capteur multivariable selon au moins l'une des revendications 3-5,
pour lequel les éléments d'entraînement des unités d'entraînement / de réception (7) sont montés sur la paroi intérieure (6) des segments aptes à vibrer (4, 5) de telle sorte que deux côtés opposés des segments aptes à vibrer (4, 5) exécutent des vibrations en opposition de phase.

7. Capteur multivariable selon au moins l'une des revendications précédentes,
pour lequel le tube de mesure (2) est fermé dans la zone d'extrémité (3) se trouvant dans le réservoir.

8. Capteur multivariable selon au moins l'une des revendications précédentes,
pour lequel un capteur de température (11) est monté sur le tube de mesure (2) de telle sorte à ne pas entraver les vibrations des segments aptes à vibrer (4, 5).

9. Capteur multivariable selon au moins l'une des revendications précédentes,
pour lequel le tube de mesure (2) comporte au moins un capteur de pression (12) ou un capteur de pression relative (121).

10. Capteur multivariable selon au moins l'une des revendications précédentes,
pour lequel le tube de mesure (2) comporte deux segments aptes à vibrer (4, 5) séparés par un segment intermédiaire (9), lesquels segments présentent chacun une unité d'entraînement / de réception (7), qui les font entrer en vibrations, et pour lequel le tube de mesure (2) est adapté - dans sa longueur et dans la position des segments aptes à vibrer (4, 5) - au réservoir de telle sorte que le premier segment apte à vibrer (4) détecte un niveau maximal et de telle sorte que le deuxième segment apte à vibrer (5) détecte un niveau minimal.

11. Capteur multivariable selon au moins l'une des revendications précédentes,
pour lequel le tube de mesure (2) présente au moins deux segments aptes à vibrer (4, 5) séparés par un segment intermédiaire (9), lesquels segments présentent chacun une unité d'entraînement / de réception (7), qui les font entrer en vibrations,
et pour lequel le tube de mesure (2) est adapté - dans sa longueur et dans la position des segments aptes à vibrer (4, 5) - au réservoir de telle sorte que l'unité de régulation / d'exploitation (8) détermine sur la base des vibrations des segments aptes à vibrer (4, 5) la densité et/ou la viscosité du produit dans différentes hauteurs prédéfinies.

12. Capteur multivariable selon au moins l'une des revendications précédentes,
pour lequel l'unité de régulation / d'exploitation (8) commande et lit successivement les unités d'entraînement / de réception (7) des segments aptes à vibrer (4, 5) et les éventuels capteurs (11, 12) supplémentaires, puis détermine la grandeur de process respective.
